# EUROPEAN PATENT APPLICATION

(11) **EP 1 366 831 A1**
(43) Date of publication of application: **03.12.2003**
(21) Application number: 02712401.5
(22) Date of filing: 15.02.2002
(51) Int. Cl.: B09B 3/00

(54) **METHOD AND SYSTEM FOR TREATING ORGANIC MATTER UTILIZING SUBSTANCE CIRCULATION SYSTEM**

(30) Priority: 15.02.2001 JP 2001081663; 26.07.2001 JP 2001226364
(71) Applicant: Tama-Tlo, Ltd., Hachioji-shi, Tokyo 192-0083 (JP)
(72) Inventor: TODA, Tatsuki Faculty of Engineering, Hachioji-shi, Tokyo 192-8577 (JP); NAGAO, Norio c/o SEAWELL CO., LTD., Toshima-ku, Tokyo 171-0022 (JP)
(74) Representative: Paget, Hugh Charles Edward
(86) International application number: JP0201323
(87) International publication number: WO02064273

(57) **Abstract**

A disposal method and disposal system for sharply reducing the residue and enhancing the sustainability and stability of disposal in disposal of organic waste are provided. The matter inside the solid phase decomposer is transported to a liquid phase decomposer I and is decomposed by land microorganisms at a solid phase decomposer III. The highly viscous products built up at that time are transported to the liquid phase decomposer I where they are dissolved in water and converted to sludge by aqueous microorganisms. The newly introduced organic waste is washed at the liquid phase decomposer I, transported together with the produced sludge to the solid phase decomposer III, and again decomposed by land microorganisms. For the transport of the matter inside the solid phase decomposer to the liquid phase decomposer I and the transport of the organic waste to the solid phase decomposer III, a solid/liquid circulator II having a twin screw structure is used. Further, at a demoisturizer IV, the moisture is separated from the gas produced at the solid phase decomposer III and the moisture is returned to the liquid phase decomposer. Further, the minimum necessary limit of gas is sent to a deodorizer V where it is deodorized and discharged as ordinary air.

## Description

### TECHNICAL FIELD

The present invention relates to a disposal method and disposal system for disposing of organic matter, in particular organic waste. In particular, it relates to a method and processing system for decomposing organic waste (including garbage and other organic matter produced from homes, hospitals, hotels, food service centers, and other facilities, dead bodies and other organic matter of animals, sea life and other organic matter adhering to port facilities, ships, etc., sludge and other organic matter not decomposing in water, etc.) (hereinafter sometimes also called simply "garbage etc.") using microorganisms and safely and stably continuously disposing of this garbage etc.

### BACKGROUND ART

First, the conventional method of disposal of organic waste and the problems therein will be explained.

### (1) Disposal by Incineration

Japan began disposing of organic waste (disposal of garbage) as part of its sanitary disposal service. Almost always, it disposed of the garbage by burning it. In recent years, the production of dioxins accompanying incineration has become a problem. It has been reported that this is mostly due to production in the case of incomplete combustion of polyvinyl chloride or other organic chlorine-based compounds. Further, in recent years, a research group of the National Institute for Environmental Studies confirmed by experiments and reported that the production of dioxins at the time of incineration of garbage is proportional to the amount of the material containing chlorine such as table salt. Due to this, it was shown that dioxins are produced even in the incineration of garbage such as garbage not containing organic chlorine-based compounds and that in fact the disposal of garbage by incineration generates harmful chemical substances hazardous to the human body. In particular, it is pointed out that even if the incineration of garbage itself is not that related to the production of dioxins, partially incomplete combustion is caused in the incinerator and the incomplete combustion caused by the moisture accounting for the majority of the ingredients is a secondary cause of the production of dioxins.

### (2) Disposal by Burial in Landfills, Carbonization, and Drying

As methods of disposal other than disposal by incineration, disposal by burial in landfills, disposal by carbonization, disposal by drying, etc. may be mentioned. Not only is disposal by burial in landfills unsanitary, but also the microorganisms in the soil of the landfill produce methane gas. Methane gas has a global warming effect 20 times that of carbon dioxide and promotes global warming. Originally, the fact is that disposal by incineration was promoted as a means for disposal taking the place of unsanitary disposal by burial in landfills. Things having come this far, it is not possible to go back just because the problem of dioxins occurs. Further, disposal by carbonization suffers from problems in terms of the inherent objectives of the reduction of volume and reduction of weight of waste disposal since it leaves behind carbonaceous matter in a state not producing carbon dioxide. Further, disposal by drying only removes the moisture and cannot be said to be complete disposal.

In this way, there are diverse methods for disposal of organic waste. Each has its own problems. Disposal of organic waste, no matter if incineration, anaerobic decomposition by burial in landfills, carbonization, drying, composting, crushing, then water treatment by a disposer, or any other method, cannot be said to be disposal of organic matter (garbage etc.)

### (3) Disposing Organic Matter by Microorganisms

Among these, the disposal system drawing the most attention in recent years has been disposal of garbage utilizing microorganisms. The disposal which can be said to be the safest among the systems for disposal of organic matter of course uses the principle of disposal occurring in the natural biosystem. The reason why the method of utilizing decomposition by microorganisms in nature is being watched has the potential possibility of being able to solve all of the problems of the other disposal methods.

Disposal of organic matter utilizing microorganisms has the following three characteristics considered in principle.

First, since microorganisms in nature dispose of the organic matter, no dioxins or other substances harmful to people are produced.

Second, since the energy of decomposition of the microorganisms is used, extra fuel or electrical energy is not consumed.

Third, the only products produced are carbon dioxide, water, and various nutrients used by plants. Not only are no secondary problems caused, but also the inherent objectives of disposal, that is, the objectives of the reduction of volume and the reduction of weight, are ideally achieved.

Garbage disposers utilizing such microorganisms use composting for converting organic matter to compost as the disposal technique. Composting technology is technology for converting organic solid waste by a composting reaction to compost containing abundant nitrogen, phosphorus, potassium, and other nutrients for use for plants and other agricultural products.

The composting reaction is comprised of a primary fermentation process for decomposing and converting protein, fats, hydrocarbons, and other fast decomposable organic matter to inorganic matter in a short time (several days to several weeks) and a secondary fermentation process for decomposing and stabilizing poorly decomposable cellulose, hemicellulose, lignin, or other organic matter over a long time (three months to six months).

In the primary fermentation process, heat energy is produced in the process of proliferation and decomposition by land microorganisms. This heat energy varies depending on the nature of the material, but if controlling the inside of the fermentation tank by a certain moisture content and ventilation speed, the heat energy is generated, so that the temperature inside the fermentation tank can be held around 60°C. It is possible to cause the moisture accounting for close to 90% of the garbage to evaporate. It is this primary fermentation process which a garbage disposer utilizes as the disposal principle. The weight can be reduced by at least 90% by this process.

However, in the garbage disposers currently on the market, the disposal process ends at the primary fermentation process. There is no function involving the secondary fermentation process. Further, when the disposed matter has a high moisture content such as garbage, when loaded, sawdust, rice hulls, etc. called "substrates" are mixed in to adjust the moisture for the disposal. These substrates are comprised of basically poorly decomposable organic matter, so do not decompose in the primary fermentation process. Therefore, the residue which the garbage disposer finally has to discharge does not decompose and is comprised of the remaining substrate and the at least 90% reduced garbage. These are discharged as large amounts of immature compost.

The garbage disposers currently being marketed are generally divided into elimination types and compost types. Garbage disposers are based on these two models. Since appearing, various types of garbage disposers have been marketed.

However, these garbage disposers all operate on the same principle as mentioned above and do not solve the fundamental problems, so there is no perfect one.

Here, the problems in the garbage disposal technology of the prior art will be explained in detail.

Garbage disposal technology has come under increasing attention in recent years as technology for converting organic waste from the home to the valuable material of compost. However, technology of a practical level has not been established. The purchasing users are forced to bear with odor and the work accompanying frequent maintenance.

As the problems in conventional garbage disposal, there are problems in the conversion of garbage to compost itself and problems in the garbage disposers. These problems exist as separate problems. They will be explained below:

### 1. Problems of Composting Itself

### (1) Compost cannot be produced from garbage produced from urban areas

The garbage discharged from urban areas often contain salt. Salt builds up in the soil and becomes a cause of salt damage. Plastic, glass, and other foreign matter are also mixed in. Substances harmful to crops such as heavy metals are concentrated and directly have a detrimental effect on crops. Therefore, the garbage etc. discharged from urban areas is unsuitable as the raw material for compost.

The only compost plants which actually are succeeding are ones securing good quality raw materials. Even if garbage disposers are installed at town garbage dumps, it is impossible that good quality garbage will be collected there. The author of *Composting Technology,* Professor Fujita of the University of Tokyo, describes as conditions for success of a compost plant that "a compost facility has to be ranked as a production facility and considered as a subsystem for waste disposal practically". Therefore, the success of a composting plant is determined by whether at least 80% good quality materials can be secured.

### (2) Production of compost requires extensive land

Compost is applied mostly in the spring and fall. Composting plants receive the waste serving as the raw materials for this every day, so storage facilities for the compost become required in the winter and summer when the amounts of consumption become smaller. In reality, however, neither the side producing the compost nor the side using it has the extra space for storing it. Further, the garbage produced by composting apparatus is immature compost which cannot be utilized as compost as it is. It has to be converted to compost through the long treatment process of secondary fermentation. Therefore, there are the problems of construction of a secondary fermentation facility etc. and both expenses and land are required.

### (3) Production areas and consumption areas of compost are far apart and transport costs are entailed

When converting the garbage and other waste discharged from urban areas into compost, the farmland for using and consuming it is far away and therefore transport costs become involved.

Due to these problems, it is very difficult to utilize composting technology for disposal of the garbage produced in the urban areas. It is necessary to review the utilization of the technology. That is, composting technology is technology for changing into compost organic waste, which has lost value in human society, but is valuable as material for compost. It is not totally unrealistic to convert the organic waste discharged from the urban areas and home into compost.

### 2. Problems of Garbage Disposers

There are two problems of garbage disposers themselves: (1) the stability of disposal and (2) the sustainability of disposal. The "stability of disposal" means the function of reliably disposing of a certain amount of garbage every day as a machine for disposal of garbage. Being a disposer of garbage, the reliable disposal of garbage can be said to be a natural requirement, but unfortunately no current garbage disposer has succeeded in realizing this. On the other hand, the "sustainability of disposal" means how long disposal can be continued in the state clearing the first problem of stability of disposal. Garbage disposers currently being sold require maintenance once every one month to six months. Further, the immature compost discharged at that time is also becoming a large problem. Also, washing type garbage disposers placing a burden on sewage treatment or the disposal of garbage by disposers is also becoming a cause of production of large amounts of sludge, so secondary problems are caused by methods of disposal involving decomposition by aqueous microorganisms.

Further, the production of bad odors is also becoming a major problem. Garbage disposers using microorganisms are designed to promote the activity of aerobic microorganisms using oxygen to decompose garbage to obtain a fast decomposition speed. That is, these disposers suffer from the problem of having to introduce air containing oxygen into the disposers at all times and therefore having to discharge gas containing the bad odors produced in the process of decomposition to the outside.

In most conventional composting plants, the problem of bad odors is dealt with by using the deodorization method known as soil adsorption. The soil adsorption method passes the odorous gas through soil of a depth of several tens of centimeters to deodorize it using adsorption and decomposition by microorganisms. By nature, extensive land and periodic maintenance are required. The soil adsorption method is unsuitable for products being sold as garbage disposers. Securing a deodorization method suitable for current disposers is considered necessary.

### (1) Stability of Disposal

To improve the stability of disposal, stabilization of the temperature, pH, and other ambient conditions is important. However, conventional garbage disposers do not have the function of stabilizing these ambient conditions and suffered from the following problems:
[1] Charging large amounts of garbage directly at one time causes the temperature of the fermentation tank to sharply drop.
[2] Mayonnaise or Tabasco and other extremely strongly acidic substances are charged without any pretreatment.
[3] Leftover food and other garbage contains a large amount of salt. This builds up in the fermentation tank and sharply lowers the activity of microorganisms.
[4] Disposal by composting requires maintenance of the optimal temperature of 55 to 60°C of the primary fermentation process, but the disposer is small in size and the heat ends up being dispersed.
[5] There are no disposers which can control both the amount of air blown in and the temperature of the air blown in. In the winter, a large amount of heat ends up being robbed and heat ends up being dissipated in the same way as [4].
[6] In the winter, even if the moisture contained in the garbage evaporates, it ends up condensing in the disposer and the moisture cannot be discharged outside of the disposer.

### (2) Sustainability of Disposal

General garbage disposers mix the garbage with a moisture adjuster called a "substrate" for disposal at the time of charging the garbage as explained above. The substrate is the moisture adjuster charged into the fermentation tank and used for adjusting the moisture along with sawdust or other low moisture-containing organic matter in advance when disposing of raw materials with extremely high moisture contents (garbage etc.) in the composting process. Such a method is adopted since it is difficult to blow oxygen into the raw material without adjustment of the moisture. Further, sawdust and other porous structures serve as the habitat of microorganisms.

In composting plants designed to produce compost, the substrate is mixed with the raw material to adjust the moisture. The result is then charged to the fermentation tank. The charged mixture finishes going through the primary fermentation process within a few days, is discharged, then moves on to the secondary fermentation process. However, in a garbage disposer, this is not permitted. Raw material with a high moisture content continues to be charged into the same fermentation tank at all times. Finally, dead bodies of land microorganisms and high viscosity products produced by the same build up. The high viscosity products are substances which are high in viscosity and difficult to decompose. When the amount built up reaches a certain level, the substrate, garbage, or other solid matter in the disposer clump together ("clumping" means the state of built up highly viscous products binding together the substances in the fermentation tank and the substances being disposed of becoming hard and unable to be disposed of). The clumped solid matter in the fermentation tank cannot be supplied with the oxygen necessary for decomposition and therefore the garbage cannot be disposed of at all. Therefore, the substrate in the fermentation tank has to be replaced in the short period of one month to six months. The maintenance cost therefore becomes a problem. Further, the maintenance interval also fluctuates according to the material or the state of use, the accurate maintenance intervals cannot be predicted, and there are problems in the stability of the disposer.

In this way, whether the composting type or the elimination type, periodically immature compost has to be discharged and therefore the garbage disposers are not ones which users feel eliminate the garbage in the true sense. The true level of a disposer cannot be said to have been achieved.

Above, the state of and problems in the technology for the disposal of organic matter by microorganisms were explained comprehensively, but a large number of proposals are being made from various corners for eliminating or reducing these problems. Several representative ones will be listed below.

Japanese Unexamined Patent Publication (Kokai) No. 7-124538 provides a disposer for solid organic matter which recovers the moisture evaporated from garbage without discharging it to the surroundings, enables high speed decomposition by the function of purification by a liquid purifier and the function of crushing solid organic matter, strengthens the warming function, and reduces the amount of discharge of immature compost without using a moisture adjuster.

Japanese Unexamined Patent Publication (Kokai) No. 2000-37683 provides a disposer provided with the function of using water to deodorize the odorous gas produced in a solid phase disposal tank, simultaneously uses the water to wash away the highly viscous products built up by disposal of land microorganisms in the solid phase disposal tank, drops the dissolved organic matter into a storage tank through a punched metal plate forming the bottom of the disposal tank, and purifies the water in the storage tank by aqueous microorganisms.

However, while Japanese Unexamined Patent Publication (Kokai) No. 7-124538 considers the reduction of the immature compost and other residue produced when disposing of waste (meaning buildup which remains in the disposer at the end of the solid phase organic matter decomposition process and which has to be taken out and removed, in particular indicating immature compost in conventional garbage disposers), it suffers from the problem of sustainability of the disposal and in the end discharges immature compost. That is, in the disposal of organic waste, while eliminating the garbage and other organic waste, it was merely converted in form through the increase in amount of immature compost and other products. Further, while Japanese Unexamined Patent Publication (Kokai) No. 2000-37683 could reduce the amount of the immature compost discharged, conversely it suffered from the problem of the large discharge of sludge due to the aqueous microorganisms.

In this regard, Japanese Unexamined Patent Publication (Kokai) No. 2000-189932 proposes a device which places the garbage, sludge, or other organic waste charged into a first reaction tank in copresence with aerobic and anaerobic microorganisms in a porous microorganism treatment medium, aerates this under agitation to digest the organic waste which the aerobic microorganisms draw upon for nutrition by using the aerobic microorganisms, stops the aeration and agitation to decompose and digest the organic waste which the anaerobic microorganisms draw upon for nutrition using the anaerobic microorganisms, and performs similar treatment in a second reaction tank and on so as to eliminate the garbage, sludge, and other organic waste.

This device eliminates the organic waste by repeating a method of disposal of garbage similar to those provided in Japanese Unexamined Patent Publication (Kokai) No. 7-124538 and Japanese Unexamined Patent Publication (Kokai) No. 2000-37683 for exactly the number of reactors installed. However, there are the problems that the conversion of the microorganism phase from aerobic microorganisms to anaerobic microorganisms takes time and the speed of treatment and decomposition is extremely slow. Further, there is the concern that linking a large number of reactors will cause the device to become large in size and make installation difficult.

Summarizing the above prior art, conventional garbage disposers have only utilized land microorganisms and aqueous microorganisms for disposal by decomposition independently or separately.

### DISCLOSURE OF INVENTION

The present invention was made in consideration of this situation and has as its object the provision of an organic matter disposal method and organic mater disposal system able to sharply reduce garbage or other organic waste, in other words, increase the stability and sustainability of disposal of organic waste so as to reduce garbage or other organic matter.

To achieve the above object, the organic matter disposal method of the present invention is a method of disposal of organic matter utilizing microorganisms, characterized by making the organic matter or its decomposed products in whole or in part successively pass through a solid phase decomposer for decomposing it by land microorganisms and a liquid phase decomposer for decomposing it by aqueous microorganisms.

Further, to achieve the above object, the organic matter disposal system of the present invention is a system for disposing of organic matter utilizing microorganisms having a solid phase decomposer for decomposing the organic matter and its decomposed products by land microorganisms, a liquid phase decomposer for decomposing the organic matter and its decomposed products by aqueous microorganisms, and a circulator for making the organic matter and its decomposed products in whole or in part circulate between the solid phase decomposer and the liquid phase decomposer.

The inventors of the present application studied in detail, considered, and engaged in experiments and research on disposal technology by microorganisms, which is in principle a safe and ideal organic disposal means, from an overall and detailed perspective. As a result, a novel method of disposal is invented which can be called "mutual utilization of solid phase and liquid phase microorganisms". First, the fundamentals of the technical idea of the present invention will be explained.

The activated sludge method widely used for sewage treatment is being extensively used in the world for disposal using the action of natural microorganisms. However, it suffers from the social problem of generation of large amounts of sludge.

"Sludge" is comprised of microorganisms and dead bodies of microorganisms increasing along with progress in disposal by this activated sludge method. What is important here is that it is difficult to dispose of all organic matter using just aqueous microorganisms. That is, with treatment by microorganisms in a treatment medium in the liquid of water, the production of the solid known as sludge becomes a problem.

On the other hand, in composting utilizing land microorganisms, the decomposed products are stored in the fermentation tank. Therefore, if these build up, they function as binders binding the solid treated matter in the fermentation tank (organic waste, organic waste in decomposition process, substrate, land microorganisms, etc.) and create the problem of clumping.

Once clumped solid treated matter cannot be agitated by the power of a garbage disposer. Due to that the supply of oxygen to the microorganisms stops, the disposal is stopped. The matter functioning as the binder at the present point of time is not limited, but is believed to probably be the so-called "spoilable" fulvic acid, amino acids, or other amorphous colloidal polymeric matter.

Due to the above, whether using disposal by liquid phase microorganisms (activated sludge method) or using disposal by solid phase microorganisms (composting), both liquid and solid matter are produced in disposal using proliferation and decomposition by microorganisms. These cause problems in disposal. That is, depending on whether the disposal is performed in the solid phase or liquid phase, the material causing problems in the disposal process will become different.

Inherently, in the global biosystem, such a problem does not occur. When an animal dies in a forest, microorganisms decompose i and the nutrients are used for the growth of the trees of the forest or are washed away by rain, so a certain type of matter will never remain at that location forever. The nutrients washed away by the rain are carried to the sea by the rivers and become the source of nutrition for precious marine resources.

Further, whether in the water environment or the land biosystem, the dead bodies or excrement of animals, fallen leaves, and other organic waste is decomposed and made inorganic by microorganisms. Further, the inorganically converted nutrients are again made organic by the primary producers, that is, plants, so the material circulates in the food chain of the biosystem. It is because of this circulation of materials that the forest does not end up being buried in fallen leaves and dead bodies of animals. These literally circulate through the circulation channels called the biosystem.

The present invention considers the above process of circulation of materials and provides a means for realization of disposal of organic matter eliminating the problems of the prior art and provided with sustainability, stability, and safety by transporting the solid "sludge" produced from the liquid phase decomposition process to the solid phase, transporting the soluble highly viscous products (matter contributing to clumping of substrate) produced from the solid phase decomposition process to the liquid phase, and continuously circulating these among them.

That is, there is provided a method for disposal of organic matter by utilizing microorganisms, the method of disposal of organic matter characterized by successively making the organic matter and its decomposed products in whole or part pass through a solid phase decomposer (here meaning the region where decomposition by land microorganisms occurs) and a liquid phase decomposer (here meaning the region where disposal by decomposition by aqueous microorganisms occurs).

Successively making the organic waste pass means making it pass through the solid phase decomposer and liquid phase decomposer while suitably selecting preferable conditions such as the sequence, number of passes, speed, and period in accordance with the state or size of amount of the organic waste. At this time, it is also possible not to pass all of the organic waste through all, but to pass just a part if the conditions are right for achieving the targeted effect, so "in whole or part" is referred to.

In the disposal in the present invention, in many cases, the organic matter to be disposed of is cumulative. That is, the next organic matter is not newly added after decomposition for disposal ends. New organic matter is added and built up before decomposition for disposal ends. Therefore, part or all of the matter inside the solid phase decomposer treated in the solid phase decomposer is transferred to the liquid phase decomposer where the built up highly viscous products dissolved in the liquid phase are washed away, then is transferred to the solid phase decomposer for disposal. Stability and sustainability of the disposal by decomposition are realized first by removing these substances by dissolution in the liquid phase decomposer. Here, the highly viscous products dissolved in the liquid phase mean the "substances contributing to clumping of substrate". Claim 2 indicates this.

Further, the matter inside the solid phase decomposer means all of the matter agitated inside the solid phase decomposer such as the organic waste charged for disposal, the substrate charged at the start as a moisture adjuster, the land microorganisms, highly viscous products, moisture, and sludge transported from the liquid phase decomposer.

Further, as a result of the disposal by decomposition by aqueous microorganisms in the liquid phase decomposer, a solid substance comprised mainly of the dead bodies of the microorganisms etc. (referred to as "sludge") is produced. In the present invention, all or part of this is transferred to the solid phase decomposer to be disposed of by decomposition by land microorganisms, whereby this sludge is disposed of by decomposition in the same way as the other organic waste.

That is, the disposal method according to the present invention is a disposal method characterized by circulating material inside a disposer by transferring the matter inside the solid phase decomposer to a liquid phase decomposer or transferring solid matter inside the liquid phase decomposer to the solid phase decomposer. Due to this, stable, highly sustainable disposal and a striking reduction in the amount of the organic waste are achieved.

### BRIEF DESCRIPTION OF DRAWINGS

FIG. 1 is a block diagram of the configuration of an organic matter disposal facility.
FIG. 2 is a view of the configuration showing details of an organic matter disposal facility.
FIG. 3 is a view of a solid phase direction transport screw shaft.
FIG. 4 is a view of a circulator stopping shaft.
FIG. 5 is a view of a liquid phase direction transport screw shaft.
FIG. 6 is a view of an agitation screw shaft.
FIGS. 7 are views of the change in temperature in organic waste with respect to the number of days of an experiment, wherein 7A is a view of the change in temperature inside a marketed garbage disposer of the prior art and the amount of generation of residue and 7B is a view of the change of temperature in a garbage disposer according to the present invention.
FIG. 8 is a view of the concept of disposal according to the present invention in a solid phase, liquid phase, and gas phase.
FIG. 9 is a view of the change over time of the overall wet weight of contents of a disposer in a second embodiment.
FIG. 10 is a view of the change over time of the overall dry weight of contents of a disposer in a second embodiment.
FIG. 11 is a view of the change over time of the overall mass of organic matter of contents of a disposer in a second embodiment.
FIG. 12 is a view of the change over time of the speed of decomposition of organic matter of contents of a disposer in a second embodiment.

### BEST MODE FOR CARRYING OUT THE INVENTION

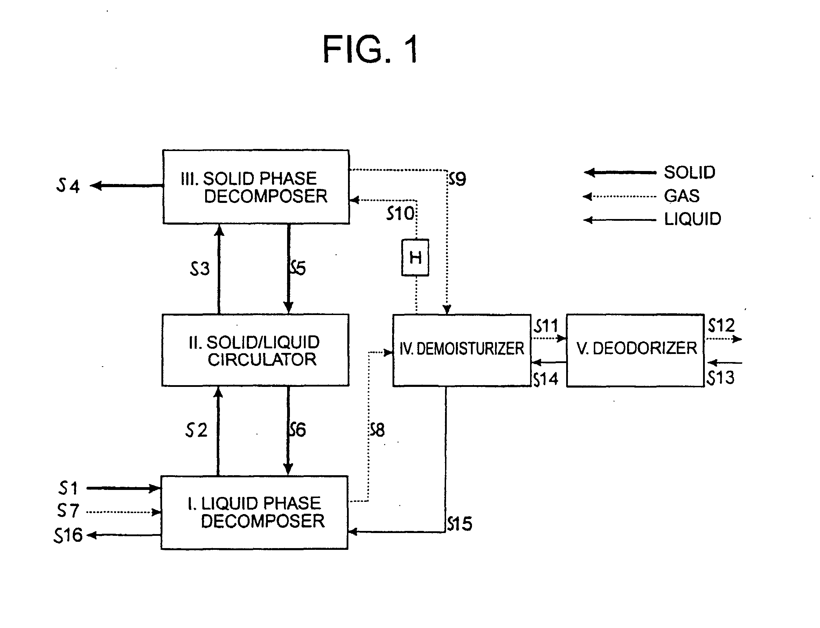

The basic configuration of a disposal system (facility) more preferable when working the invention will be explained as an embodiment of the present invention based on the block diagram shown in FIG. 1.

The organic matter disposal facility of the present embodiment has a liquid phase decomposer I, a solid/liquid circulator II, a solid phase decomposer III, a demoisturizer IV, and a deodorizer V.

The liquid phase decomposer I is a unit or device for washing the organic waste in the liquid phase or decomposing and purifying the liquid organic matter by aqueous microorganisms.

The solid/liquid circulator II is a unit or device which has the function of transporting the material inside the solid phase decomposer III to the liquid phase decomposer I and transporting the solid organic waste newly charged or the sludge or other solid matter of the liquid phase decomposer I to the solid phase decomposer III.

The solid phase decomposer III is a unit or device which decomposes the solid organic waste by land microorganisms in the solid phase.

The demoisturizer IV is a unit or device which removes the water vapor obtained by evaporation from the successively charged organic waste with a high moisture content and maintains the material inside the solid phase decomposer III at a low moisture content.

The deodorizer V is a unit or device for deodorizing and discharging the air inserted from outside the disposer for the land and aqueous microorganisms to use.

In a disposal system (facility) of this configuration, the organic waste is disposed of by the following procedure.

First, the organic waste is charged into the liquid phase decomposer I and washed as shown by the arrow S1.

Next, the organic waste is sent from the liquid phase decomposer I to the solid/liquid circulator II as shown by the arrow S2. Next, it is sent from the solid/liquid circulator II to the solid phase decomposer III as shown by the arrow S3. The organic waste is decomposed by land microorganisms in the solid phase decomposer III.

Inside the solid phase decomposer III, substances unable to be decomposed or substances extremely slow in decomposition speed build up very slightly as solids. When the amount of buildup becomes large, maintenance is performed to remove it from the solid phase decomposer III as shown by the arrow S4.

To remove the highly viscous product built up along with decomposition at the solid phase decomposer III, the substances which cannot be decomposed as a solid in the solid phase decomposer III are transported to the liquid phase decomposer I through the solid/liquid circulator II as shown by the arrows S5 and S6 and washed.

Further, they are transported to the solid phase composer III through the path shown by the above arrows S2 and S3 together with the newly charged organic waste.

On the other hand, as shown by the arrow S7, air is introduced into the liquid phase decomposer I by aeration etc. The introduced air is sent to the demoisturizer IV as shown by the arrow S8.

Further, the air containing a large amount of water vapor of the solid phase decomposer III is sent to the demoisturizer IV as shown by the arrow S9.

The air sent to the demoisturizer IV is demoisturized there and sent again to the solid phase decomposer III as shown by the arrow S10. At this time, sometimes the gas is warmed by an H (heater).

Further, only the air flowing into the demoisturizer IV is transferred to the deodorizer V as shown by the arrow S11 and is discharged to the outside after deodorization as shown by the arrow S12.

Further, tap water etc. is taken into the deodorizer V as shown by the arrow S13, used for deodorization, then transferred to the demoisturizer IV as shown by the arrow S14 and used for cooling for demoisturization.

Further, the moisture overflowing at the demoisturizer IV is transported to the liquid phase decomposer I as shown by the arrow S15, used for washing various organic wastes, and purified and discharged at the liquid phase decomposer I as shown by the arrow S16.

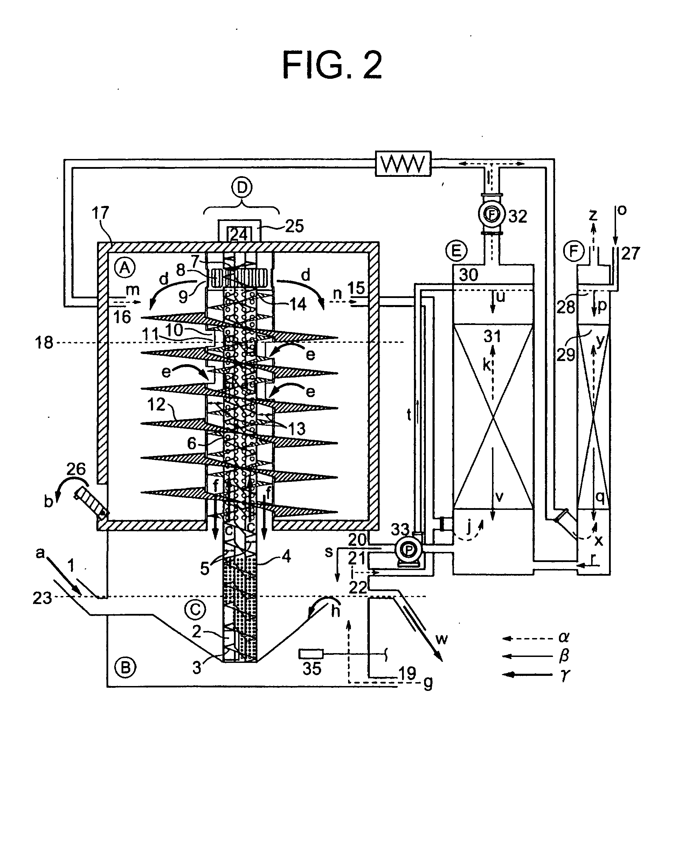

Next, a specific disposer using the disposal method of the present invention based on this basic configuration will be explained with reference to FIG. 2 to FIG. 8.

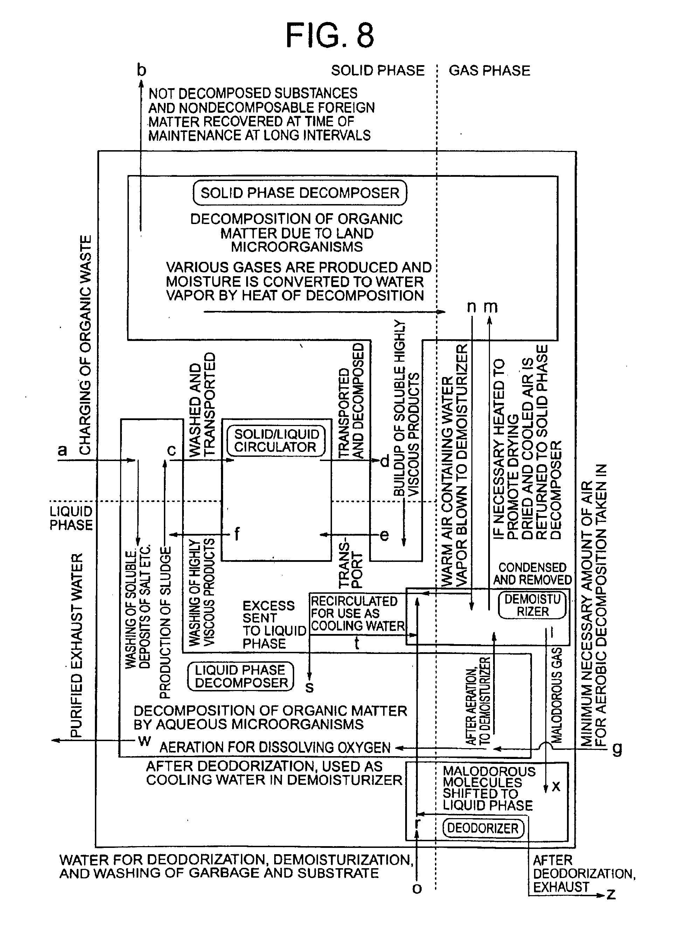

Further, FIG. 8 is reference material for understanding the content of the present invention and expresses FIG. 2 by words with reference to the disposal method of the present invention.

Not limited to the disposer of the present invention, all substances change to and exist in the three states of a solid, liquid, and gas depending on temperature. In the disposal method according to the present invention, the organic waste is decomposed by the land and aqueous microorganisms and changes to substances of three states, i.e., "vaporized substances", "liquefied or water soluble substances present as a liquid", and "poorly decomposable substances not decomposing as solids". Further, these are transported to the "gas phase", "liquid phase", and "solid phase" by the functions of the disposer according to the present invention, are suitably treated, then are discharged outside of the disposer.

Next, the specific configuration, operation, and features of the organic matter disposer shown in FIG. 2 will be explained focusing on this material cycle.

### (1) Material cycle in solid phase in disposer

The material cycle in the solid phase begins from the charging (arrow "a") of organic waste from the organic waste charging port 1.

The charged organic waste is introduced into the liquid phase decomposer B and washed. Here, when garbage or other organic waste is charged, the mayonnaise, Tabasco, or other extremely low pH substances or salt or other liquid substances preventing proliferation of microorganisms are washed to the liquid phase and stabilize the pH.

Note that the pH is measured by a pH sensor 35 explained later.

The washed organic waste settles in the settling tank and is transported to the solid phase decomposer A as shown by the arrow "c" and "d" through the solid/liquid circulator D.

The detailed operation of the solid/liquid circulator D at this time will be explained later.

In the solid phase decomposer A charged with the organic waste, the decomposition by the land microorganisms causes the heat of decomposition. The moisture accounting for the majority of the organic waste is evaporated and turns into water vapor. Simultaneously, malodorous molecules also are produced as a gas along with the decomposition and, due to the decomposition of the microorganisms, change to gas with a high concentration of carbon dioxide.

The agitation blades 12 in the solid phase decomposer A send air into the matter in the solid phase decomposer A to promote decomposition.

The land microorganisms proliferate while decomposing the organic waste. Along with this, substances causing clumping, that is, highly viscous products, build up. The highly viscous products are the dead bodies of the land microorganisms or substances which land microorganisms biologically discharge. At the present time, details are not known. Whatever the case, when the highly viscous products reach a certain concentration, clumping occurs.

To wash these away, the matter inside the solid phase decomposer A is picked up by the liquid phase direction transport screw as shown by the arrow "e", passes through the liquid phase direction transport clearance 13, and is transported to the liquid phase decomposer B as shown by the arrow "f". The transported matter is washed in the settling tank C.

The matter inside the solid decomposer A after washing passes through the solid phase direction transport clearance 5 together with the organic waste newly recharged as shown by the arrow "a" and is again transported to the solid phase decomposer A. At that time as well, these act as habitat for the microorganisms and as moisture adjusters. During this, the organic waste in the middle of decomposition is further decomposed.

Further, the activated sludge produced in the liquid phase decomposer is recovered at the settling tank as shown by the arrow "h", is transported to the solid phase decomposer A together with the organic waste, and is decomposed in the same way as the other organic waste.

The speed of decomposition by the land microorganisms becomes maximum at a temperature inside the solid phase decomposer A of 55°C to 65°C. This speed of decomposition changes depending on the main composition of the land microorganisms and type of the organic waste, so the temperature inside the solid phase decomposer A can be controlled to at least 40°C to 80°C.

The heat of decomposition produced is used as much as possible for the evaporation of the moisture, so the solid phase decomposer A is covered by a heat insulating material 17 with low heat conductivity so as to keep down the dissipation of heat energy.

Note that by providing a second solid phase decomposer for controlling the temperature to not more than 40°C for decomposing the organic matter which could not be decomposed in the solid phase decomposer A, it is possible to further reduce the amount of residue.

Further, to promote the decomposition of the land microorganisms, it is necessary to hold the moisture content to a moisture content of around 50% inside the solid phase decomposer A. Therefore, it is necessary to control at least the matter inside the solid phase decomposer A to a moisture content of 30% to 70%.

Inside the solid phase decomposer A, the organic matter is continuously decomposed. The built up matter is believed to be matter difficult to dissolve as a solid, that is, poorly decomposable organic matter (lignin, cellulose, and hemicellulose), or spoons, forks, or other foreign matter. These are discharged from a solid disposed matter takeout port 26 as shown by the arrow b.

### (2) Material circulation in liquid phase inside disposer

The material circulation in the liquid phase starts from the tap water or other fresh water from a liquid intake port 27 flowing in as shown by the arrow "o".

The organic waste decomposed at the solid phase decomposer A becomes a gas including malodorous molecules and water vapor in large amounts. The fresh water flows from a deodorizer shower pipe 29 in the inside 28 of a deodorizer F from above to below as shown by the arrow "q" while traveling along the surface of the deodorization gas/liquid contact promoting filler. Due to this, the gas to be exhausted containing a large amount of malodorous molecules or water vapor rising from below and the shower of fresh water come into contact, whereby the water vapor is cooled and condensed. Further, the malodorous molecules are dissolved in the water, whereby deodorization is completed as shown by the arrow "y".

The odor-free, harmless gas containing a large amount of deodorized carbon dioxide is exhausted as shown by the arrow "z" to the outside of the facility of the present invention.

The fresh water picks up the malodorous molecules at the deodorizer to exhibit part of its function for deodorization, then is transported to the demoisturizer E as shown by the arrow "r". The water used for deodorization is used for cooling the gas in the solid phase decomposer A at the demoisturizer E.

At the demoisturizer E, the cooling water passes through the shower pipe of a demoisturizer 30 as shown by the arrow "u", passes through a demoisturizer gas/liquid contact promotion filler 31 as shown by the arrow "v", and is brought into contact with gas, whereby it is cooled as shown by the arrow "k".

The cooling water used in the demoisturizer E is circulated by a coolant circulation pump 33 and thereby reutilized as cooling water as shown by the arrow "t".

The cooled gas can be stripped of its moisture by causing the water which it contains to condense. The water passes through the deodorizer F and the demoisturizer E and is transferred from a liquid phase inlet 20 to the liquid phase decomposer B as shown by the arrow "s" for use for washing the organic waste and for washing for removing the highly viscous products.

Finally, the dirty water after washing these is purified by the activated sludge method and exhausted from an exhaust port 22 as shown by the arrow "w".

In this way, in the present system, the adsorption ability, heat capacity, and other properties of water are utilized to the maximum.

### (3) Material circulation in gas phase in disposer

The material circulation in the gas phase starts by blowing in air to the liquid phase decomposer B from an air inlet 19 as shown by the arrow "g".

The air blown in as shown by the arrow "g" causes oxygen to dissolve in the water in the liquid phase decomposer B and supplies oxygen to the microorganisms active in the activated sludge treatment. The air penetrating the liquid phase of the liquid phase decomposer B by aeration is sent from a liquid phase intake port 21 to the inside of the demoisturizer as shown by the arrow "i" and shifts to the gas phase in the disposer. At this time, the outside air temperature is lower than the temperature in the solid phase decomposer A, so the demoisturization action is promoted.

By new air being blown into the gas phase, the concentration of oxygen of the gas phase rises. The gas phase is all connected, so oxygen is supplied to the solid phase decomposer A as well.

At the solid phase decomposer A, the oxygen in the air is used for decomposition and proliferation by the aerobic microorganisms and carbon dioxide and various gases are discharged. Further, the moisture accounting for the large part of the garbage becomes water vapor and thereby is gasified here.

The gas containing large amounts of water vapor and malodorous gases is blown from a solid phase exhaust port 15 to the demoisturizer as shown by the arrow "n" and is introduced into the demoisturizer E as shown by the arrow "j".

The water vapor in the air introduced into the demoisturizer E is cooled to condense and removed as shown by the arrow "k".

The majority of the demoisturized air is returned to the solid phase decomposer A by a gas circulation fan 32 and circulated as shown by the arrow "l".

The demoisturization function of the gas of the demoisturizer E may be used together with existing demoisturization methods or may be used alone.

The amount of the gas blown into the liquid phase decomposer B must be discharged outside of the disposer, so the same amount of gas as the amount blown is sent to the deodorizer for deodorization. The gas blown to the deodorizer as shown by the arrow "x" comes in contact with the fresh water, whereby the gaseous malodorous molecules dissolve in the water and the exhaust gas is deodorized. The final product of the gas phase is a harmless gas with a high concentration of carbon dioxide and low concentration of oxygen and is of completely no problem in safety either.

The deodorization function of a gas of the deodorizer F may use the existing adsorption, combustion, and other deodorization techniques together or may use them alone. Further, complete deodorization may be performed according to need.

### (4) Solid/liquid circulator D

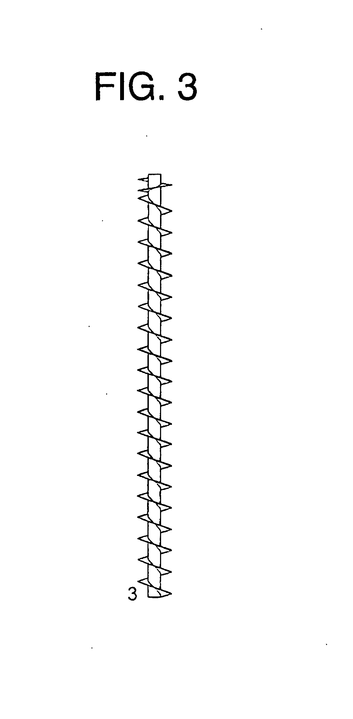

Next, the solid/liquid circulator D characterized by having the twin screw structure in the present invention will be explained with reference to FIG. 3 to FIG. 6.

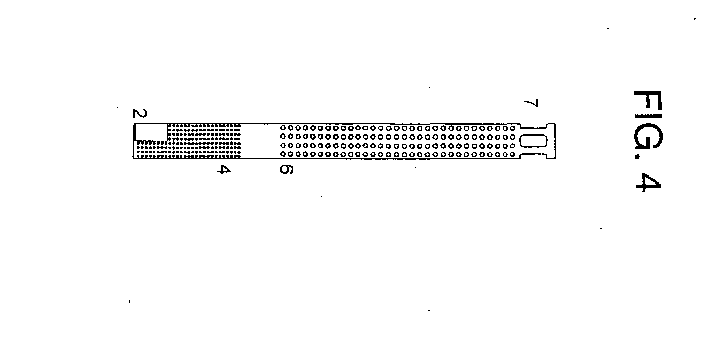

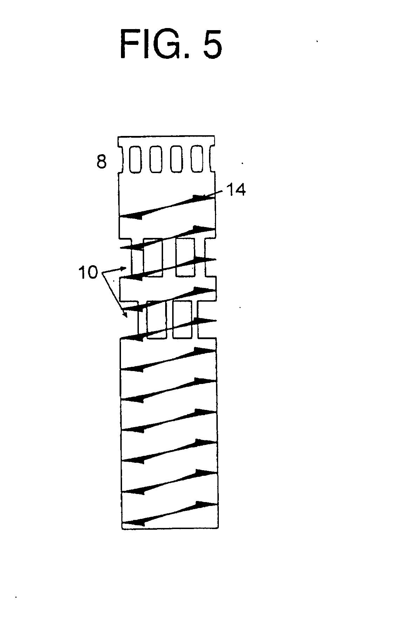

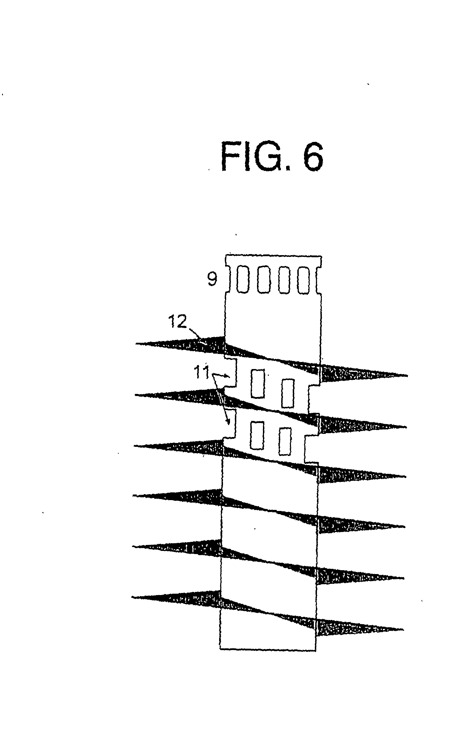

FIG. 3 is a partial view of a solid phase direction transport screw (including 3 of FIG. 2), FIG. 4 is a partial view of a circulator stopping shaft (including 2, 4, 6, and 7 of FIG. 2), FIG. 5 is a partial view of a liquid phase direction transport screw shaft (including 8, 10, and 14 of FIG. 2), and FIG. 6 is a partial view of an agitation screw shaft (including 9, 11, and 12 of FIG. 2).

In the twin screw structure device, a solid phase direction transport screw shaft is arranged at the center, a liquid phase direction transport screw shaft is arranged at its outside, and an agitation screw shaft is arranged at its outside, that is, the outermost side of the twin screw structure.

The solid matter built up in the settling tank C in the liquid phase decomposer B (charged organic waste, cleaned content of solid decomposer A, and sludge produced by activated sludge treatment) is taken from the solid disposed matter intake port 2 of the circulator stopping shaft (FIG. 4) by the solid phase direction transport screw 3.

The solid matter taken in passes through the solid phase direction transport clearance 5 and is transported to the solid phase decomposer A as shown by the arrow "c". The solid matter directly after washing includes large moisture. At the time of transport, the excess moisture drops down from stopping shaft bottom holes 4 formed at the bottom of the circulator stopping shaft and is removed.

On the other hand, at the solid phase decomposer A, continuous decomposition of organic matter by land microorganisms occurs. To wash away the built up highly viscous products, the matter to be washed inside the solid phase decomposer is introduced from an agitation shaft disposed matter inlet 11 formed at the side surface of the agitation screw shaft through a transport shaft disposed matter inlet 11 formed at the top surface of the liquid phase direction transport screw shaft (FIG. 5) and is transported from the upward direction to the downward direction through a liquid phase direction transport clearance 13 by a liquid phase direction transport screw 14. At this time, the transported matter inside the solid phase decomposer is adjusted to a low moisture content, so the excess moisture contained in the matter transported in the upward direction by the solid phase direction transport screw is absorbed from the stopping shaft top holes 6. The low moisture content type of the matter inside the solid phase decomposer functions as a sponge.

Therefore, the matter transported to the solid phase decomposer A absorbs more and more moisture the further in the upward direction and therefore the excess moisture can be wiped away. Further, by taking time and transporting the matter slowly, around when reaching the inside of the solid phase decomposer A, the matter is adjusted to the temperature in the solid phase decomposer A and the organic waste can be charged without destroying the condition of the microorganisms in the solid phase decomposer A.

The solid transported in the upward direction by the solid direction transport screw passes through a stopping shaft disposed matter outlet 7 formed at the topmost part of the circulator stopping shaft and a transport shaft disposed matter outlet 8 and is charged from an agitation shaft disposed matter outlet 9 to the inside of the solid phase decomposer. At this time, the circulator stopping shaft is always at a stop and the liquid phase direction circulation and transport screw shaft and agitation screw shaft are rotating, so the disposed matter is crushed when passing through the outlets and the speed of decomposition is promoted.

### (5) Measurement of pH of matter inside solid phase decomposer

In the organic disposal facility of the present embodiment, as explained above, the circulation and treatment of the solid phase matter or liquid phase matter are controlled so that the pH is stabilized as mentioned above. For this purpose, the pH sensor 35 is provided inside the liquid phase decomposer B. The matter inside the solid phase decomposer to be monitored for pH is transported to the liquid phase decomposer B (including settling tank C), so by measuring the pH of the liquid phase matter, the pH of the solid phase matter can also be measured and control to the desired state becomes possible.

The pH sensor 35 may be any ordinary known sensor such as one using a glass electrode, one using an antimony electrode, one using an ISFET (ion selective field effect transistor), or one using a comparative electrode used in combination with a glass electrode.

In this composter, garbage disposer, or other organic matter disposal facility, it is known that the pH of the solid matter being disposed of in the fermentation tank, that is, the solid phase decomposer, is directly related to the decomposition speed (Kitawaki and Fujita 1984, Fujita et al. 1985). The intermediate product of the reaction, that is, the acetic acid or other lower fatty acid causes the pH to drop. Due to this, the decomposition completely stops at pH5. Conversely, around the pH8 to 9, the decomposition becomes the highest in speed.

Measurement of the pH, which is such an important control factor, conventionally required extraction, agitation, centrifugal separation, filtration, and other complicated steps. Simple measurement was difficult. Therefore, the practice had been to predict the pH of the content of the solid phase decomposer from the pH of the exhausted water of condensation and use this for control (Fujita et al. 1985), but with this method it was difficult to accurately predict the pH value obtained by experimental techniques.

With such a method of measurement of pH in an organic disposal facility of this embodiment, it is possible to estimate the pH value by a far higher precision than the pH obtained from the water of condensation.

### (6) Finally discharged matter and energy

The final residue discharged from the organic matter disposal facility of the present embodiment becomes as follows:
Solid: organic matter not decomposable in a fermentation tank (lignin, cellulose, and hemicellulose)
Intermixed foreign matter (spoons, forks, etc.)
Liquid: water purified by activated sludge method
Gas: odor-free, harmless gas with high concentration of deodorized carbon dioxide

Further, the energy used in the organic matter disposal facility of the present embodiment can be considered to be as follows.

In the present system, since the conversion of organic matter to inorganic matter utilizes the reaction of combustion of biological matter by respiration in the microorganisms, energy is not used for conversion to inorganic matter. Accordingly, it is sufficient to use only the energy for creating an environment for maintaining the following proliferation and decomposition by the microorganisms.
1. Electrical energy used for the heater for maintaining the activity of the land microorganisms (not required in the summer and of extent for supplementing the heat of decomposition due to the microorganisms even in the winter)
2. Electrical energy used for transport of matter (screw, pump, etc.)
3. Water used for deodorization and demoisturization

Up until now, we have disposed of garbage by the method of incineration. "Incineration" is a reaction for causing oxidation of garbage by a combustion reaction, that is, a reaction for bonding oxygen (O₂) with the carbon (C) contained in the garbage to form carbon dioxide (CO₂) and ash. This combustion reaction is a reaction utilizing a large amount of fuel and only caused under a temperature condition of several hundred degrees centigrade.

On the other hand, there is a reaction for combustion under the temperature condition of several tens of degrees centigrade at the most. This is a combustion reaction arising in the body called "respiration". This combustion reaction enables a reaction which normally would not arise unless under a superhigh temperature of several hundreds of degrees centigrade to convert carbon to carbon dioxide under a temperature of tens of degrees centigrade by the protein of enzymes produced in the body.

Therefore, the solid phase decomposer of an organic matter disposer of the present embodiment is a combustion furnace which converts organic matter to inorganic matter by a combustion reaction due to respiration of microorganisms. The present invention can be said to propose a method of sustaining this combustion under a constant high combustion speed.

That is, it should be added that the disposer of organic matter according to the present invention which we proposed utilizes the combustion reaction called "respiration" of microorganisms and is an "organic matter low temperature combustion furnace" which causes combustion of organic waste.

### (7) Control

In the organic disposal facility of the present embodiment, there are more control items than with a conventional disposal facility. The control mode is also more complicated. Therefore, the operation of the facility as a whole can be controlled by a computer and can be managed and controlled from a distance through a network. Specifically, it is possible to automate the simplified instructions of course and also perform all of the remote monitoring of the temperature, pH, state of occurrence of odor, etc. and detection of timing and execution of maintenance by remote control or automatically.

### Experiment 1

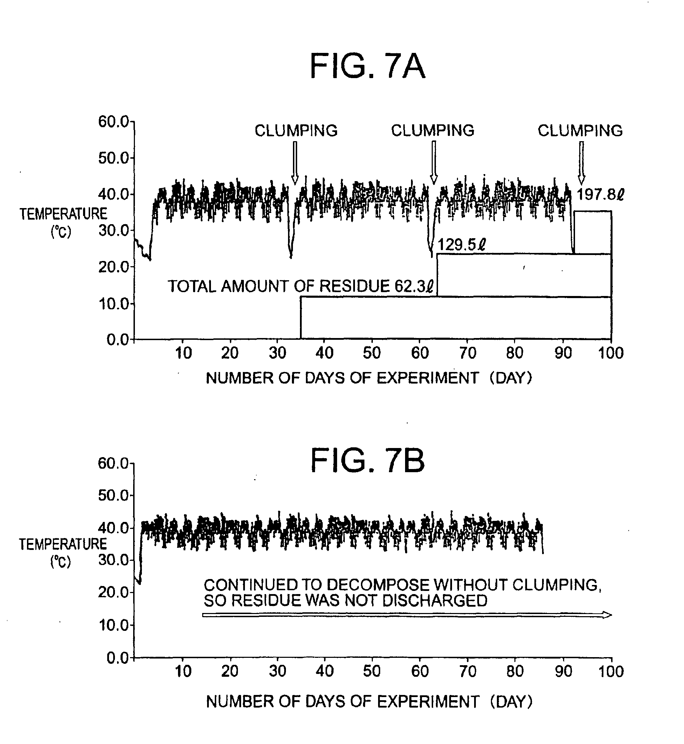

For the experiment, kitchen refuse discharged from a Japanese restaurant was used as the organic waste. 7 kg were charged every day divided into two loads of 3.5 kg each. Further, as the substrate, 60 liters of sawdust of a size of about 2 mm were charged. Two test disposers were prepared for comparison: a conventional disposer for continuous charging without washing as prior art and an organic matter disposal facility of the present embodiment for working the method of the present invention (hereinafter referred to as the "invention disposer"). Further, in the invention disposer, the disposal method of the present invention was realized by washing by 3 liters at a time and recovering and recharging the sludge produced by the washing. The results are shown in FIG. 7.

When both of the conventional disposer performing disposal by the conventional method (results shown in FIG. 7A) and the invention disposer using the method of the present invention (results shown in FIG. 7B) are smoothly decomposing the waste, the heat of decomposition of the microorganisms caused the temperature in the disposer to rise and it fluctuated at the range of 32°C to 45°C. When clumping occurred and disposal became impossible, the temperature inside the disposer fell to a value equal to that of the outside air (22 to 23°C). In the commercially available disposer, the content of the disposal clumped and disposal became impossible after around 30 days and the content had to be replaced. At each exchange, residue was produced as immature compost. At the time of the third exchange, the total amount of residue became 197.8 liters.

On the other hand, in the invention disposer working the method of the present invention, no clumping occurred and the matter could be continuously decomposed. The experiment was cut off in three months. In practical use, the disposer is not limited to this period and is considered to be usable semipermanently. Therefore, there was no need for replacing the content of the disposer, so no immature compost was produced.

In the present experiment, the fact that washing removed the high viscosity products and therefore enabled striking sustainability and the fact that simultaneously working the disposal method of the present invention only produces an extremely low amount of residue were shown. This is believed to be because the land microorganisms produce enzymes and the sludge produced by the liquid phase decomposer is decomposed in the same way as other organic waste. The existence of this type of enzyme produced by the land microorganisms active in decomposition in the solid phase decomposer has been proven from various research discoveries. Theoretically sufficiently convincing results were obtained.

Further, at this time, the odor ingredients of the gas discharged from the waste disposal facility of the present embodiment are shown in Table 1. It can be confirmed that the control values are sufficiently satisfied by a deodorizer used for a waste disposal facility of the present embodiment.

**Table 1.**

| Odor Ingredients of Exhaust | | | |
|---|---|---|---|
| Malodorous substance | Concentration of malodorous substance of air at inlet side of deodorizer (ppm) | Concentration of malodorous substance at exhaust side of deodorizer (ppm) | Control value (ppm) |
| Ammonia | 300 | 0.6 | 2 to 5 |
| Amines | 5 | 0.01 | 0.02 to 0.07 |
| Hydrogen sulfide | 0.2 | 0.06 | 0.06 to 0.2 |
| Methyl mercaptan | 0.1 | 0.002 | 0.002 to 0.01 |
| Methyl sulfide | 0.1 | 0.05 | 0.05 to 0.2 |
| Methyl disulfide | 0.1 | 0.03 | 0.03 to 0.1 |
| Acetoaldehyde | 0.1 | 0.01 | 0.1 to 0.5 |

### Example 2

For the experiment, a mixture of 200 g of dog food and 800 g of distilled water was utilized as artificial garbage. The amount charged was made 1 kg per day. For the substrate, 5 liters of 2 mm size sawdust were charged for use. Three test disposers were prepared: a disposer for continuously charging artificial garbage without washing as a conventional disposer (hereinafter called a "conventional disposer"), a disposer performing washing by 750 ml once every three days and not recharging sludge as an organic matter disposer 1 for working the method according to the present invention (hereinafter called an "invention disposer 1"), and a disposer performing washing by 750 ml once every three days and recharging sludge produced as an organic matter disposer 2 for working the method according to the present invention (hereinafter called an "invention disposer 2").

For the experiment, the total mass of the content of the disposer of each of the three disposers was measured and the wet weight, dry weight, and organic matter weight were found. The wet weight was found by subtracting the mass of the disposer from the total mass of the test disposer including the disposer content. The dry weight was found by collecting a partial sample from each of the disposers and drying it at a temperature of 60°C for 48 hours. Further, the mass of the organic matter was found by burning a dried partial sample in a muffle furnace at 600°C for 4 hours and treating the gasified mass as the mass of the organic matter.

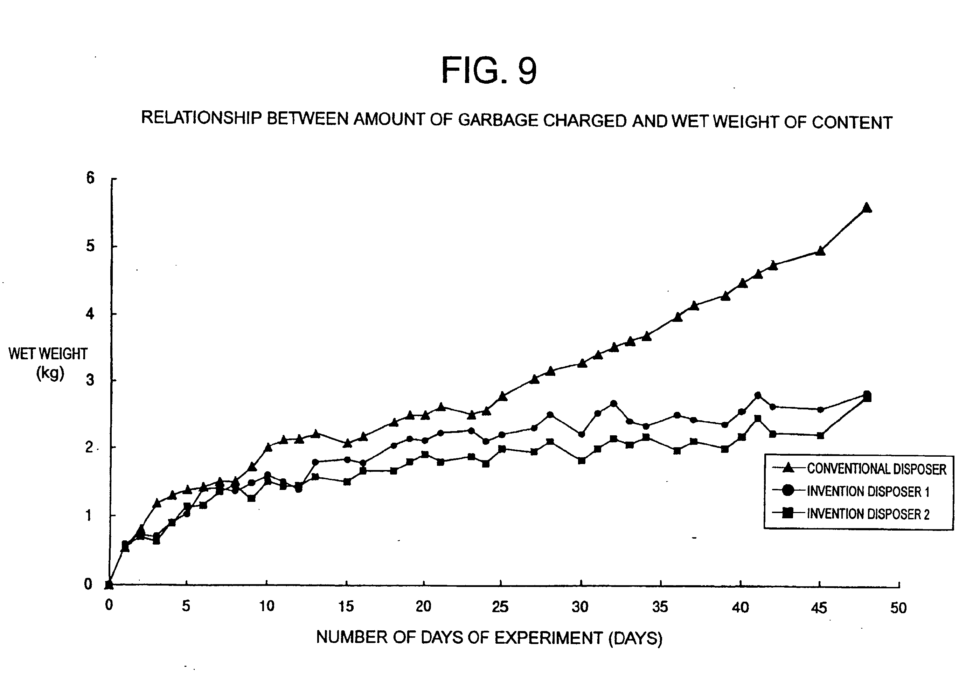

FIG. 9 is a view of the change over time of the total wet weight of the content of a disposer for the conventional disposer, the invention disposer 1, and the invention disposer 2.

In the conventional disposer, the wet weight starts to increase around 24 days after the start of the experiment, agglomeration occurs, and due to this normal decomposition no longer occurs and the charged garbage continues to build up. On the other hand, the invention disposer 1 and invention disposer 2 working the method of the present invention performed normal decomposition without agglomeration.

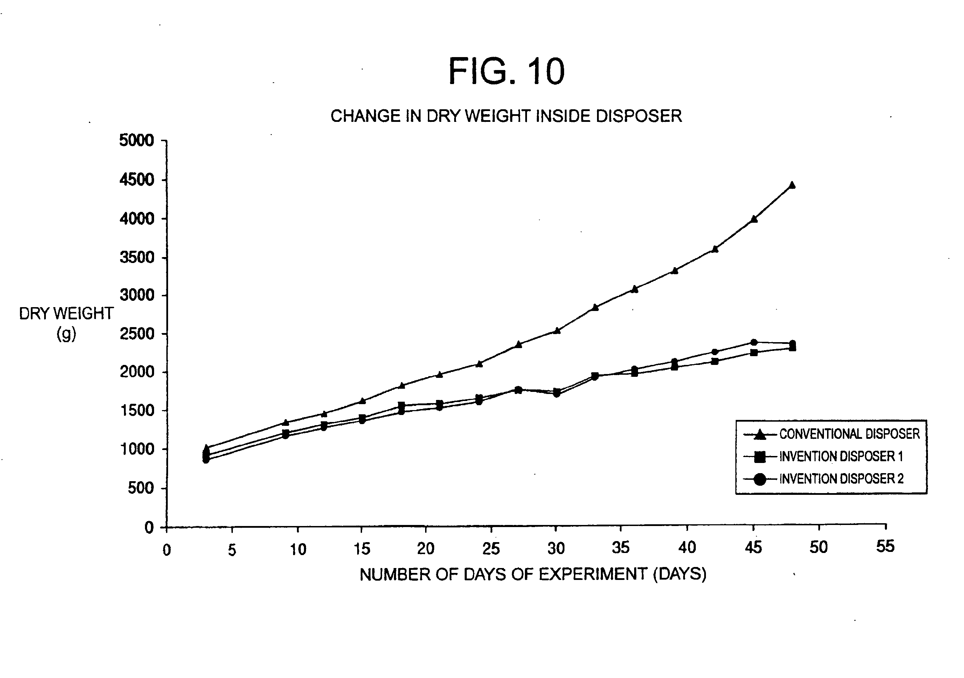

FIG. 10 is a view of the change over time of the total dry weight of the content of the disposer for the conventional disposer, the invention disposer 1, and the invention disposer 2.

In the conventional disposer, it was confirmed that buildup of the content of the disposer occurred around 10 to 15 days after the start of the experiment and that agglomeration occurred faster than the timing confirmed by the change over time of the wet weight. On the other hand, the invention disposer 1 and invention disposer 2 working the method of the present invention were free from agglomeration and exhibited normal decomposition.

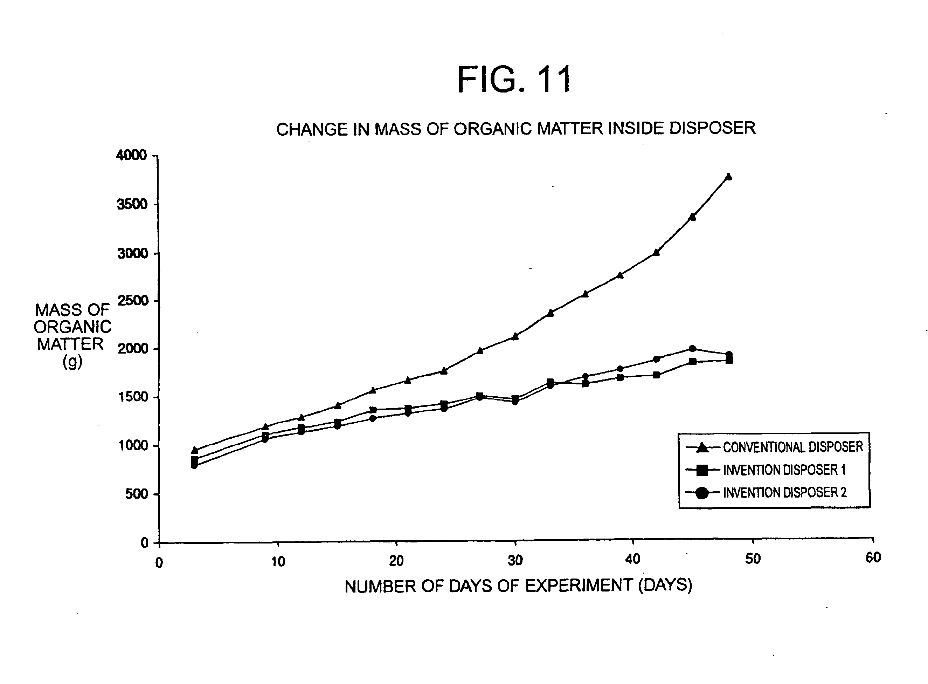

FIG. 11 is a view of the change over time of the total mass of the organic matter of the content of the disposer for the conventional disposer, the invention disposer 1, and the invention disposer 2.

In the conventional disposer, in the same way as the timing confirmed by the change over time of the dry weight, it was confirmed that buildup of the content of the disposer occurred around 10 to 15 days after the start of the experiment. On the other hand, the invention disposer 1 and invention disposer 2 working the method of the present invention performed normal decomposition without agglomeration.

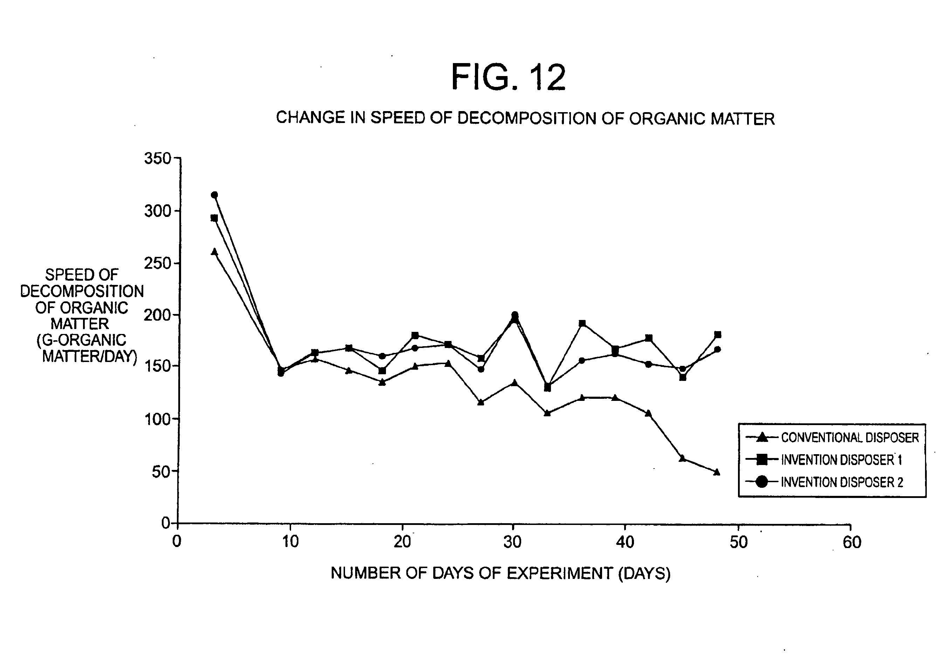

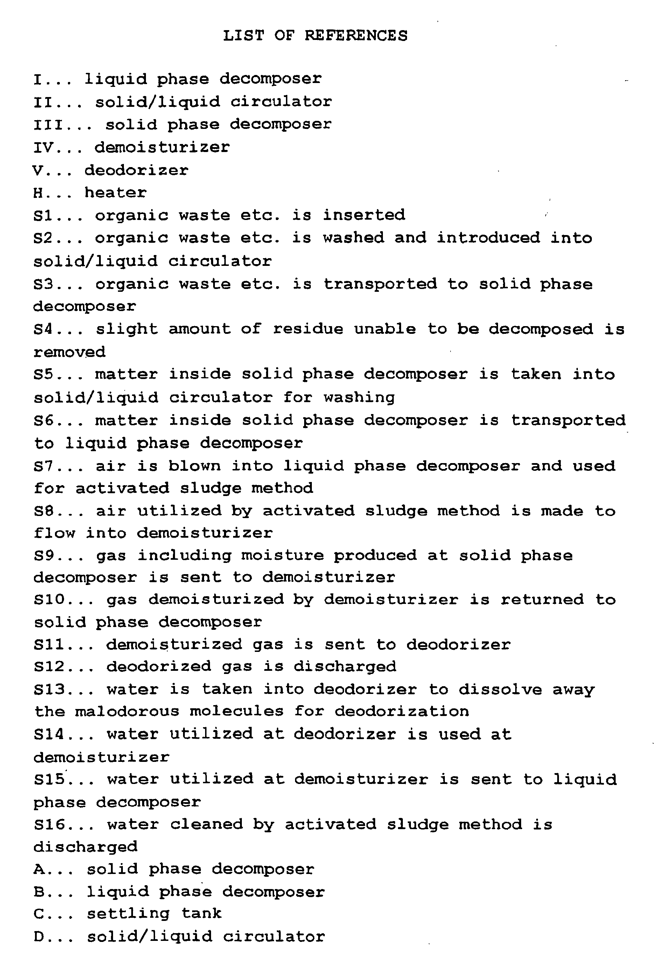

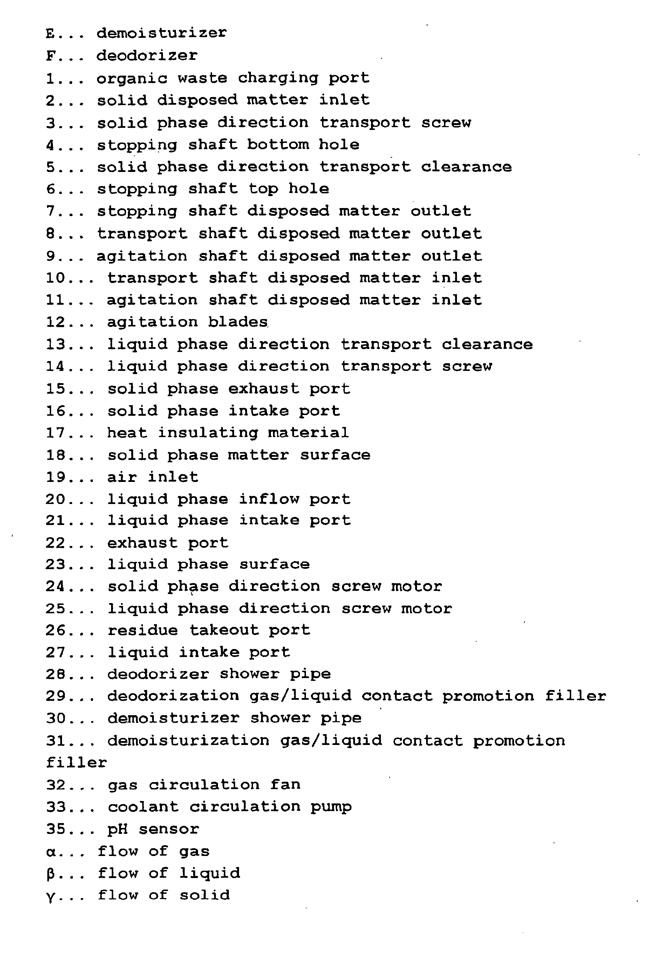

FIG. 12 is a view of the change over time of the organic matter decomposition speed of the content of the disposer for the conventional disposer, invention disposer 1, and invention disposer 2. The unit of the organic matter decomposition speed is (g-organic matter/day). The mass of organic matter decomposed per day is shown in gram units.

In the conventional disposer, the organic matter decomposition speed fell along with the number of days of the experiment and dropped down to 50 (g-organic matter/day) on the 48th day. On the other hand, the organic matter decomposition speeds of the invention disposer 1 and invention disposer 2 working the method of the present invention could be maintained at 160 (g-organic matter/day). By this experiment, it became clear that with a conventional disposer, it was only possible to decompose less than one-third of the amount of organic matter (180 g) charged at the first day. Further, it became clear that with the invention disposer 1 and invention disposer 2 using the present invention, there is no drop caused in the decomposition speed and close to 90% of the organic matter could continue to be decomposed.

In this way, in the disposal system (facility) of organic waste of the present embodiment, in the disposal of organic waste, it becomes possible to sharply reduce the amount of residue compared with the prior art which discharged a large amount of immature compost.

Further, stabilization of disposal of organic matter using microorganisms, which had been extremely unstable in the prior art, to a practical level can be said to be an important effect of the present invention.

Further, it is extremely safe disposal free from production of bad odors or pathogens or chemical substances which might have a detrimental effect on the human body.

Further, as a social effect, since it is possible to discharge garbage out of the home using a disposer, society is freed from the troublesome work of the past.

In Japan, the disposal of garbage by disposers has been prohibited since it produces a large amount of sludge. However, due to its convenience, large corporations have been combining this with conventional organic matter disposal techniques using only aqueous microorganisms, while disposers have come to be used in the homes.

These are not fundamental solutions to the problems as explained above. They just increase the number of small sized sewage treatment facilities and lighten the burden on conventional sewage treatment plants. Further, the maintenance and other work involved in such sewage treatment requires tremendous labor. This again causes production of large amounts of sludge nationwide.

However, from this viewpoint as well, since the disposal method according to the present invention can fundamentally make organic matter inorganic, sludge is not produced from the water discharged from there.

Note that disposal of organic matter according to the present invention is a highly convenient means of use which utilizes disposers in individual general homes, discharges the organic matter such as garbage outside the homes, then collects it in units of several hundred households by the disposal method and facilities of the present invention, and continuously processes it.

### INDUSTRIAL APPLICABILITY

Note that the present invention is not limited to the above embodiments and can be modified in any suitable ways. Further, any suitable objects can be disposed of.

For example, the method and system of the present invention can be applied to the disposal of sludge etc.

The disposal of organic matter by the conventional activated sludge method is just conversion of the dirt in water to other organic matter called sludge. Therefore, the problem arises that a large amount of sludge is produced and builds up. At the present time, disposal of this sludge involves massive costs. The concept of the disposal method of the present invention of not producing sludge from garbage is important from this perspective as well.

This system does not convert "the organic matter of the dirt of water or garbage" to "other organic matter called sludge", but makes it "inorganic". That is, getting the maximum out of the reaction for conversion to inorganic matter in the process of decomposition by proliferation by microorganisms by using microorganisms of both the liquid and solid phase is the principle of disposal of the present invention. Therefore, the matter decomposed and made inorganic by the present system flows into the global material circulation as it is and is discharged into the rivers, sea, and atmosphere in a form harmless to the global biosystem.

The amount of sludge produced in Japan is not a ratio of the amount of garbage. It accounts for the large majority of the total organic waste. As for the future outlook of the present invention, solution of this sludge problem may be mentioned.

In this way, according to the present invention, it is possible to provide an organic matter disposal method and organic matter disposal system able to sharply reduce garbage and other organic matter, in other words, able to enhance the stability and sustainability of the disposal of organic waste and thereby sharply reduce the garbage and other organic waste.

## Claims

1. A method of disposal of organic matter utilizing microorganisms,
said organic matter disposal method **characterized by**
making organic matter or its decomposed products in whole or in part successively pass through a solid phase decomposer for decomposing it by land microorganisms and a liquid phase decomposer for decomposing it by aqueous microorganisms.

2. An organic matter disposal method as set forth in claim 1, **characterized by** transferring part or all of the matter inside said the solid phase decomposer treated in said solid phase decomposer to said liquid phase decomposer, washing away a material dissolved in a liquid phase, then transferring the rest again to said solid phase decomposer.

3. An organic matter disposal method as set forth in claim 1, **characterized by** supplying part or all of said solid matter produced in said liquid phase decomposer to decomposition by said solid phase decomposer.

4. An organic matter disposal method as set forth in claim 1, **characterized by** washing away all or part of said organic matter and its decomposed products at said liquid phase decomposer, then transferring the rest to said solid phase decomposer to supply it for decomposition.

5. A system for disposal of organic matter utilizing microorganisms,
said organic matter disposal system comprising:
a solid phase decomposer for decomposing said organic matter and its decomposed products by land microorganisms,
a liquid phase decomposer for decomposing said organic matter and its decomposed products by aqueous microorganisms, and
a circulator for making said organic matter and its decomposed products in whole or in part circulate between said solid phase decomposer and said liquid phase decomposer.

6. An organic matter disposal system as set forth in claim 5, **characterized in that** said material circulator has a twin screw structure providing a function of transporting the matter inside said solid phase decomposer to said liquid phase decomposer and a function of transporting solid material of said liquid phase decomposer to said solid phase decomposer.

7. An organic matter disposal system as set forth in claim 5, further comprising a device having the function of supplying a gas heated to 40°C to 80°C to said solid phase decomposer.

8. An organic matter disposal system as set forth in claim 5, further comprising:
a demoisturizer for reclaiming moisture from gas produced in said solid phase decomposer and
a deodorizer for deodorizing said gas after demoisturization.

9. An organic matter disposal system as set forth in claim 8, **characterized by** removing the moisture by the demoisturization function of said demoisturizer and maintaining the matter inside said solid phase decomposer at a moisture content of 30% to 70%.
